## Europäisches Patentamt
## European Patent Office
## Office européen des brevets

(19)

(11) Numéro de publication: **0 346 807 A1**

(12)
# DEMANDE DE BREVET EUROPEEN

(21) Numéro de dépôt: 89110613.0

(22) Date de dépôt: **12.06.89**

(51) Int. Cl.4: **G05B 9/02 , B61L 5/18**

(30) Priorité: **16.06.88 FR 8808078**

(43) Date de publication de la demande:
**20.12.89 Bulletin 89/51**

(84) Etats contractants désignés:
**AT BE CH DE ES FR GR IT LI NL**

(71) Demandeur: **ALSTHOM**
**38, avenue Kléber**
**F-75784 Paris Cédex 16(FR)**

(72) Inventeur: **Gabillet, Jean-François**
**44 rue de l'Orée des Bois**
**F-60580 Coye la Foret(FR)**
Inventeur: **Gelabert, Andrès**
**22 rue des Maquignons**
**F-95580 Margency(FR)**

(74) Mandataire: **Weinmiller, Jürgen et al**
**Lennéstrasse 9 Postfach 24**
**D-8133 Feldafing(DE)**

(54) **Dispositif de validation d'état.**

(57) L'invention a pour objet un dispositif de validation de l'état d'un organe électrique (1) alimenté à partir d'une alimentation électrique (2) à travers un interrupteur commandé (3) par un signal élaboré selon un programme par un système informatique (6) et contenant un ordre de fermeture associé à un code comportant une identification dudit organe,
caractérisé en ce que le courant traversant ledit organe (1) est envoyé sur un premier enroulement (81) d'un transformateur (8) à noyau (80) saturable comprenant un second enroulement (82) et un troisième enroulement (83), ledit second enroulement (82) recevant du système informatique (6) une séquence comportant ledit signal codé, le troisième enroulement (83) étant relié au système informatique (6) pour vérification du signal, cette vérification étant effectuée lorsque le courant du premier enroulement (81) sature le noyau (80) du transformateur (8), empêchant la transmission du signal codé du second (82) au troisième (83) enroulement, la vérification conduisant à la coupure de l'alimentation (2) si l'état de fermeture de l'alimentation de l'organe n'est pas conforme au programme prévu par le système.
Application notamment à la commande des postes d'aiguillage.

## Dispositif de validation d'état.

La présente invention concerne un dispositif de validation de l'état d'un organe ou d'un appareil commandé par un système informatique.

L'invention s'applique notamment aux organes ou objets qui règlent le trafic ferroviaire, en particulier dans les postes d'aiguillage informatisés.

De tels objets sont par exemple les feux de signalisation. Pour obtenir une totale sécurité de fonctionnement, il convient de s'assurer que :
- L'organe, lorsqu'il marche normalement, se comporte conformément à ce qui en est attendu ;
- En cas de dysfonctionnement ou de perturbation, il conduit bien à des états non contraires a la sécurité.

L'invention a pour objet un dispositif de contrôle a posteriori et de validation de l'état d'un organe électrique alimenté à travers un interrupteur commandé par un signal élaboré et contenant un ordre de fermeture associé à un code comportant une identification dudit organe,
caractérisé en ce que le courant traversant ledit organe est envoyé sur un premier enroulement d'un transformateur à noyau saturable comprenant un second enroulement et un troisième enroulement, ledit second enroulement recevant du système informatique une séquence comportant ledit signal codé, le troisième enroulement étant relié au système informatique pour vérification du signal, cette vérification étant effectuée lorsque le courant du premier enroulement sature le noyau du transformateur, empêchant la transmis sion du signal codé du second au troisième enroulement, la vérification conduisant à la coupure de l'alimentation si l'état de fermeture de l'alimentation de l'organe n'est pas conforme au programme prévu par le système.

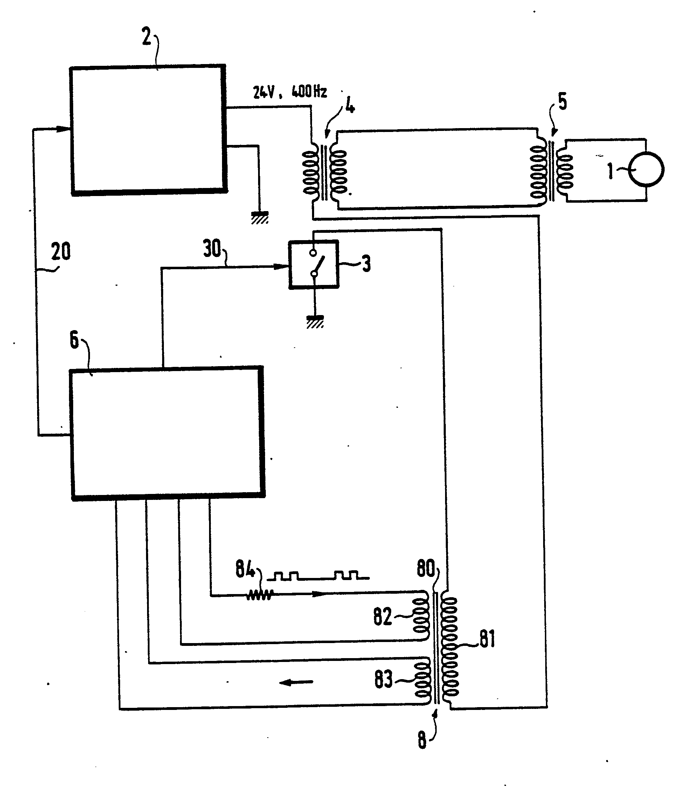

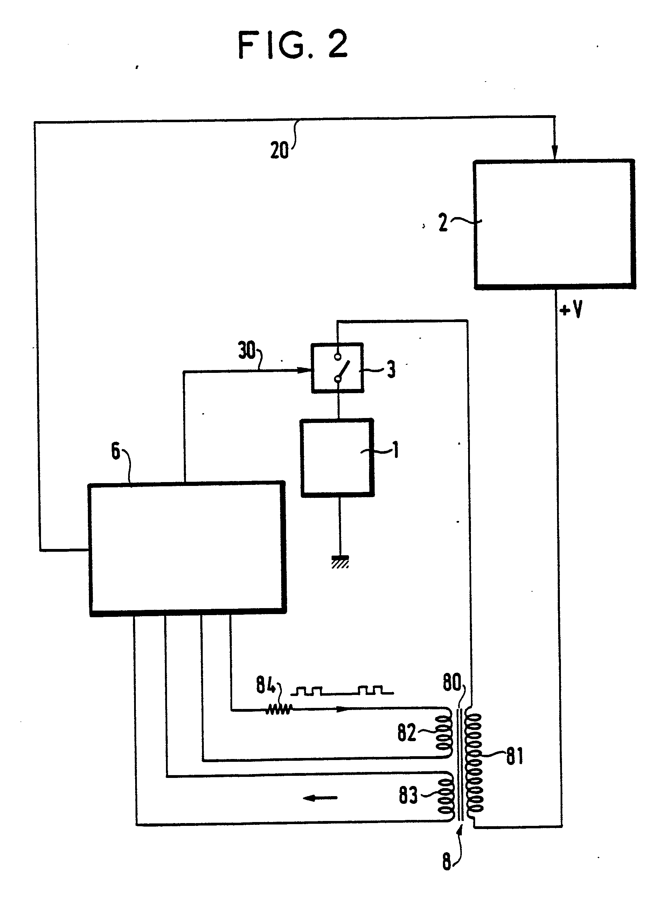

L'invention sera bien comprise par l'explication donnée ci-après en référence au dessin annexe dans lequel les figures 1 et 2 sont des schémas du dispositif de validation de l'invention.

Dans la figure 1, la référence 1 désigne un organe dont le fonctionnement est régi par un programme de calcul élaboré par un système informatique.

Il s'agit par exemple, dans l'application à un poste d'aiguillage informatisé, d'un feu de signalisation commandant le passage d'un train.

L'organe est alimenté par un bloc d'alimentation 2, fournissant par exemple des créneaux de tension à 24 volts sous 400 HZ, à travers un interrupteur électronique commandé 3.

La référence 4 désigne un transformateur de sortie du bloc d'alimentation. La référence 5 est un transformateur choisi en fonction du type d'organe à alimenter.

L'interrupteur 3 est commandé, à travers une liaison 30, par un système informatique 6 chargé d'élaborer des ordres selon l'exploitation à réaliser.

Le courant d'alimentation de l'organe 5 (ou un courant qui lui est proportionnel) traverse un premier enroulement 81 d'un transformateur 8 à noyau de matériau ferromagnétique 80.

Un second enroulement 82, relié au système informatique par une résistance 84, est traversé par une séquence codée dont le code comporte une identification de l'organe 1.

En l'absence de courant dans l'enroulement 81, la séquence codée est induite dans un troisième enroulement 83 du transformateur 8, relié au système 6.

Dès que l'interrupteur 3 est fermé, le courant de l'organe (ou un courant qui lui est proportionnel) traverse l'enroulement 81 et vient saturer le matériau ferromagnétique du noyau 80.

La séquence codée ne passe plus dans l'enroulement 83 ; le système 6 est programmé pour vérifier que l'ordre d'alimentation de l'organe 6 correspond bien au programme prévu et qu'il ne résulte par d'un défaut.

Si le programme constate une erreur, il envoie immédiatement par la liaison 20 un ordre d'arrêt du bloc d'alimentation 2, ce qui à pour effet de couper l'alimentation de l'organe 1.

L'ordre d'arrêt du bloc d'alimentation 2 est assuré par un dispositif informatique de sécurité (à base de monoprocesseur codé dans l'exemple particulier de l'application au poste d'aiguillage).

Grâce à l'invention, on est certain qu'un organe ne peut être alimenté durablement de manière intempestive.

Ces organes sont par exemple les feux de signalisation, les passages à niveaux, les pétards, les tableaux etc...

L'invention n'est pas limitée au domaine ferroviaire, mais s'applique à toute installation commandée numériquement pour laquelle on recherche un haut degré de sécurité.

Dans la figure 2, la référence 1 désigne un organe dont le fonctionnement est régi par un programme de calcul élaboré par un système informatique.

Il s'agit par exemple, dans l'application à un poste d'aiguillage informatisé, d'un relais.

L'organe est alimenté par un bloc d'alimentation 2, fournissant une tension continue, à travers un interrupteur électronique commandé 3.

L'interrupteur 3 est commandé, à travers une liaison 30, par un système informatique 6 chargé d'élaborer des ordres selon l'exploitation à réaliser.

Le courant d'alimentation commandé par l'interrupteur 3 traverse un premier enroulement 81 d'un transformateur 8 à noyau de matériau ferromagnétique 80.

Un second enroulement 82, relié au système informatique par une résistance 84, est traversé par une séquence codée dont le code comporte une identification de l'organe 1.

En l'absence de courant dans l'enroulement 81, la séquence codée est induite dans un troisième enroulement 83 du transformateur 8, relié au système 6.

Dès que l'interrupteur 3 est fermé, le courant de l'organe traverse l'enroulement 81 et vient saturer le matériau ferromagnétique du noyau 80.

La séquence codée ne passe plus dans l'enroulement 83 ; le système 6 est programmé pour vérifier que l'ordre d'alimentation de l'organe 6 correspond bien au programme prévu et qu'il ne résulte par d'un défaut.

Si le programme constate une erreur, il envoie immédiatement en sécurité par la liaison 20 un ordre d'arrêt du bloc d'alimentation 2, ce qui à pour effet de couper l'alimentation de l'organe 1.

L'invention n'est pas limitée au domaine ferroviaire, mais s'applique à toute installation commandée numériquement pour laquelle on recherche un haut degré de sécurité.

Dans l'exemple du poste d'aiguillage, il peut être adjoint à l'organe commandé 1 un temporisateur de sécurité permettant de retarder la commande dudit organe d'un temps supérieur au temps nécessaire au système informatique 6 pour relire la séquence codée et couper l'alimentation 2.

Dans ce cas de figure, on est certain qu'un organe ne peut être alimenté un instant aussi bref soit-il de manière intempestive.

Ces organes sont par exemple des relais commandant des moteurs d'aiguilles.

**Revendications**

Dispositif de validation de l'état d'un organe électrique (1) alimenté à partir d'une alimentation électrique (2) à travers un interrupteur commandé (3) par un signal élaboré selon un programme par un système informatique (6) et contenant un ordre de fermeture associé à un code comportant une identification dudit organe, caractérisé en ce que le courant traversant ledit organe (1) est envoyé sur un premier enroulement (81) d'un transformateur (8) à noyau (80) saturable comprenant un second enroulement (82) et un troisième enroulement (83), ledit second enroulement (82) recevant du système informatique (6) une séquence comportant ledit signal codé, le troisième enroulement (83) étant relié au système informatique (6) pour vérification du signal, cette vérification étant effectuée lorsque le courant du premier enroulement (81) sature le noyau (80) du transformateur (8), empêchant la transmission du signal codé du second (82) au troisième (83) enroulement, la vérification conduisant à la coupure de l'alimentation (2) si l'état de fermeture de l'alimentation de l'organe n'est pas conforme au programme prévu par le système.

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| A | FR-A-1476720  (COMPTEURS ET MOTEURS ASTER) <br> * résumé ,figure 2 * <br> --- | 1 | G05B9/02 <br> B61L5/18 |
| A | US-A-3546476 (S.H. FRASE) <br> * colonne 2, ligne 25 - colonne 3, ligne 60; figure 1 * <br> --- | 1 | |
| A | BE-A-658531 (ATELIERS DE CONSTRUCTIONS ELECTRIQUES DE CHARLEROI) <br> * page 2, ligne 17 - page 3, ligne 19; figure 1 * <br> --- | 1 | |
| A | CH-A-455928 (ATELIERS DE CONSTRUCTIONS ELECTRIQUES DE CHARLEROI) <br> * colonne 4, lignes 14 - 29; figures 1, 2 * <br> ----- | 1 | |

**DOMAINES TECHNIQUES RECHERCHES (Int. Cl.4 )**

G05B
B61L

Le présent rapport a été établi pour toutes les revendications

| Lieu de la recherche | Date d'achèvement de la recherche | Examinateur |
|---|---|---|
| LA HAYE | 04 SEPTEMBRE 1989 | GOETZ P.A. |